# FASCICULE DE BREVET EUROPEEN

(11) **EP 0 911 574 B1**
(45) Date de publication et mention de la délivrance du brevet: **08.02.2006**
(21) Numéro de dépôt: 98402602.1
(22) Date de dépôt: 20.10.1998
(51) Int. Cl.: F21S 8/10, G02B 6/00, F21V 5/00

(54) **Diffuseur de feux de signalisation de véhicules**
Lichtabgabeoptik für Fahrzeugsignalleuchten
Light diffuser for vehicle signal lights

(30) Priorité: 21.10.1997 FR 9713176; 13.10.1998 FR 9812830
(43) Date de publication de la demande: 28.04.1999
(73) Titulaire: AUTOMOTIVE LIGHTING REAR LAMPS FRANCE, 89330 Saint-Julien-Du-Sault (FR)
(72) Inventeur: Mauviere, Jean-Paul, 27130 Les Baux Sainte-Croix (FR)
(74) Mandataire: Faber, Jean-Paul

(56) Documents cités:
- EP-A- 0 584 545
- DE-A- 4 129 094
- FR-A- 2 564 982
- GB-A- 2 274 158

## Description

La présente invention vise un diffuseur utilisable dans des feux de signalisation de véhicules.

L'invention vise, plus particulièrement, des feux tels que feu de stop, lanterne arrière, feu de position, feu d'éclairage intérieur, etc...

Ces feux comprennent généralement un réflecteur parabolique, une source de lumière telle qu'une lampe à incandescence ou une fibre optique et un verre optique destiné à répartir la lumière sur une zone déterminée.

Dans de tels feux, une grande partie de la lumière émise est perdue et pratiquement on n'arrive pas à obtenir une répartition égale de la lumière sur la surface déterminée.

La présente invention vise un diffuseur qui permet de remédier à ces inconvénients.

Le diffuseur, selon l'invention, se base sur la technique de l'optique fluide décrite dans le brevet français n° 2 689 961.

Le diffuseur, selon l'invention, est du type comprenant une source de lumière, ledit diffuseur étant caractérisé en ce qu'il est constitué d'une plaque d'un matériau transparent conformée pour présenter une zone d'entrée de la lumière et une face de diffusion de la lumière comportant une série de lentilles cylindriques adjacentes les unes aux autres et une zone intermédiaire adjacente à la zone de diffusion de la lumière et présentant une série d'ouvertures dont une extrémité est située au droit des lignes de jonction des lentilles cylindriques entre elles, tandis que l'autre extrémité forme un dioptre plan, un bord desdites ouvertures présentant une concavité dirigée de manière à recevoir les rayons lumineux émis par la source de lumière et formant les faces latérales de renvoi desdits rayons lumineux vers les lentilles cylindriques.

Une telle disposition qui fait appel à la technique de l'optique fluide permet d'obtenir une diffusion sensiblement égale de la lumière sur toute la longueur de la plaque.

Suivant une autre caractéristique, les bords de chaque ouverture constituant les faces de renvoi des rayons lumineux vers les lentilles cylindriques sont formés par des génératrices en spirales logarithmiques.

Suivant un premier mode d'exécution, applicable, plus particulièrement pour la réalisation de feux de stop de véhicules, la zone d'entrée de la lumière est constituée par une encoche située du côté d'une face de la plaque opposée à celle pourvue des lentilles cylindriques et formée de deux spirales logarithmiques symétriques entre elles.

Suivant une caractéristique particulière, la zone d'entrée de la lumière est située à une extrémité de la plaque.

De préférence, les ouvertures sont disposées parallèlement et à égale distance les unes des autres.

Dans le cas où la zone d'entrée de la lumière est constituée par une encoche située du côté d'une face de la plaque opposée à celle pourvue des lentilles cylindriques, les ouvertures sont disposées en deux séries, une première série s'étendant au droit de l'encoche jusqu'à une extrémité et une seconde série s'étendant au droit de l'encoche jusqu'à l'autre extrémité, les concavités de la première série étant tournées en regard de celles de la seconde série.

Suivant une forme d'exécution particulière, la zone d'entrée de lumière comprend une série d'encoches situées sur la face de la plaque opposée à celle pourvue des lentilles cylindriques, la distance séparant les encoches entre elles et la forme de ces dernières sont telles que les faisceaux émis par les sources de lumière se chevauchent.

Suivant une caractéristique de détail, la face de la plaque opposée à celle pourvue des lentilles cylindriques présente, à partir de la zone d'entrée de la lumière située à une extrémité de la plaque, une zone convexe prolongée par une zone de faible concavité s'étendant vers l'autre extrémité.

Suivant encore un détail constructif, la zone convexe de la face opposée à la zone de diffusion de la lumière présente, au voisinage de la zone d'entrée de la lumière, une ondulation pour former un dioptre.

Enfin, la zone de diffusion de la lumière présente, à partir de la zone d'entrée de la lumière, une zone convexe, une zone sensiblement rectiligne et une zone terminale convexe.

L'invention va maintenant être décrite avec plus de détails en se référant à des modes de réalisation particuliers donnés à titre d'exemple seulement et représentés aux dessins annexés, dans lesquels :
Figure 1 est une vue en élévation d'un diffuseur, selon l'invention.
Figure 2 est une vue en élévation, à plus grande échelle d'une partie du diffuseur de la figure 1.
Figure 3 est une vue en élévation d'un diffuseur suivant une variante de réalisation.
Figure 4 est une vue en coupe suivant la ligne 4-4 de la figure 3.
Figures 5, 6 et 7 sont des vues schématiques montrant le trajet des différents rayons lumineux dans les différentes parties du diffuseur.
Le diffuseur représenté aux figures 1 et 2 est réalisé dans une plaque de matière transparente, de préférence incolore, mais, pour des applications particulières, cette plaque pourrait être colorée en rouge, vert ou autre.

Le diffuseur est désigné par la référence 1 et présente une face 2 de diffusion de la lumière et une face arrière 3.

La face 2 est légèrement convexe et présente une série de lentilles cylindriques 4 reliées par des lignes de jonction 4a.

La face arrière 3 présente cinq encoches 5 dans chacune desquelles s'insère une lampe d'éclairage 6, ces lampes étant portées par un porte-lampe 7 relié à une source de courant électrique convenable. Les encoches 5 constituent des zones d'entrée de la lumière. Ces encoches sont formées de deux spirales logarithmiques symétriques par rapport à un plan passant par l'axe de la lampe correspondante 6.

Au voisinage de la face 2, le diffuseur 1 présente une zone intermédiaire dans l'épaisseur de laquelle sont découpées deux séries d'ouvertures 8 et 9.

Les ouvertures 8 sont orientées dans le sens opposé aux ouvertures 9. Chaque ouverture 8 présente une entrémité 8a située au droit des lignes de jonction 4a des lentilles cylindriques 4.

Les extrémités des ouvertures 8, opposées aux extrémités 8a, forment des dioptres plans de transfert de la lumière.

Les ouvertures 8 présentent une surface concave 8d formée par des génératrices en spirale logarithmique et destinées à former des faces de renvoi des rayons lumineux vers les lentilles cylindriques 4.

Les autres bords 8b des ouvertures 8 sont généralement convexes et permettent de renvoyer les rayons lumineux qu'elles reçoivent vers les surfaces 8d qui les évacuent à travers les lentilles cylindriques 4.

Les ouvertures 9 sont réalisées de la même manière que les ouvertures 8 et on a reporté sur les figures la référence 9 affectée des lettres a, b, c et d pour désigner les parties correspondant à celles des ouvertures 8. Les surfaces concaves 8d des ouvertures 8 sont ainsi tournées en regard des surfaces concaves 9d des ouvertures 9.

Les rayons issus des lampes 6 pénètrent dans l'épaisseur de la plaque 1 à travers les bords des encoches 5, ceux qui rencontrent les surfaces 8d et 9d sont automatiquement éjectés par les lentilles cylindriques, les autres rayons sont, par les surfaces 8b, 9b, renvoyés vers les surfaces 8d, 9d, qui les évacuent à travers les lentilles cylindriques 4.

Un tel diffuseur peut être obtenu par moulage, découpage, extrusion ou autre.

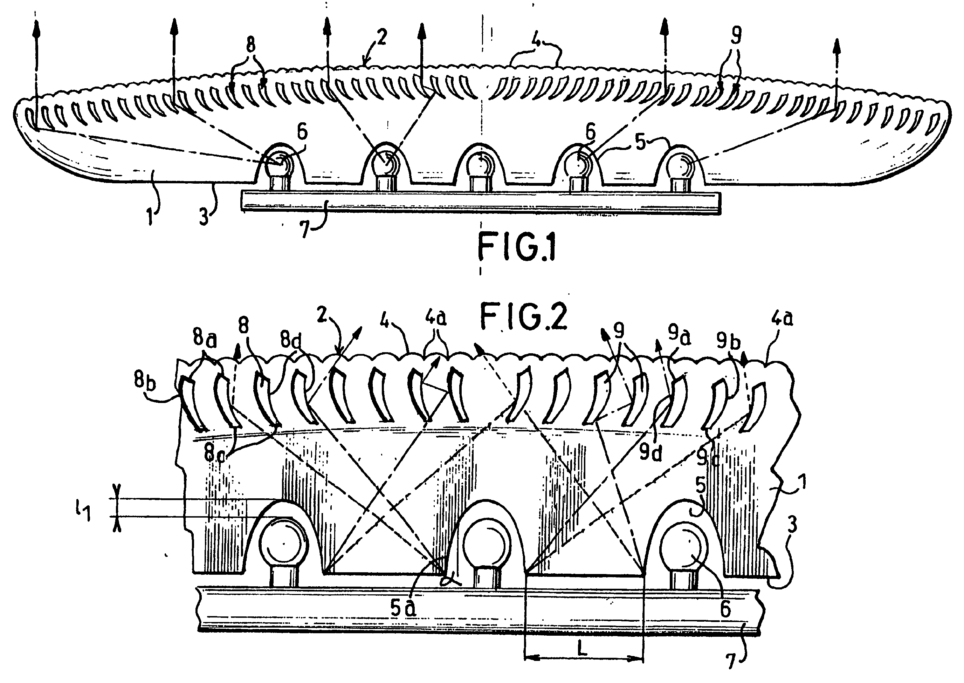

Comme on le voit à la figure 2, un espace L1 est ménagé entre l'extrémité des lampes 6 et le fond des encoches 5 afin que la chaleur émise par les lampes 6 soit évacuée et que la plaque ne subisse aucune déformation.

De préférence, la distance L séparant les encoches 5 est calculée de manière que les rayons lumineux émis par les lampes 6 se chevauchent.

En effet, la distance L séparant les encoches est calculée de manière que les rayons émis par les lampes 6 forment un faisceau principal (voir traits mixtes) et un faisceau secondaire (voir traits pointillés), les faisceaux secondaires se chevauchent largement, tandis que les faisceaux principaux se chevauchent moins largement. Cette disposition présente l'avantage que le dispositif peut fonctionner avec une source lumineuse défaillante, le cumul des autres flux lumineux étant suffisant pour assurer les conditions photométriques.

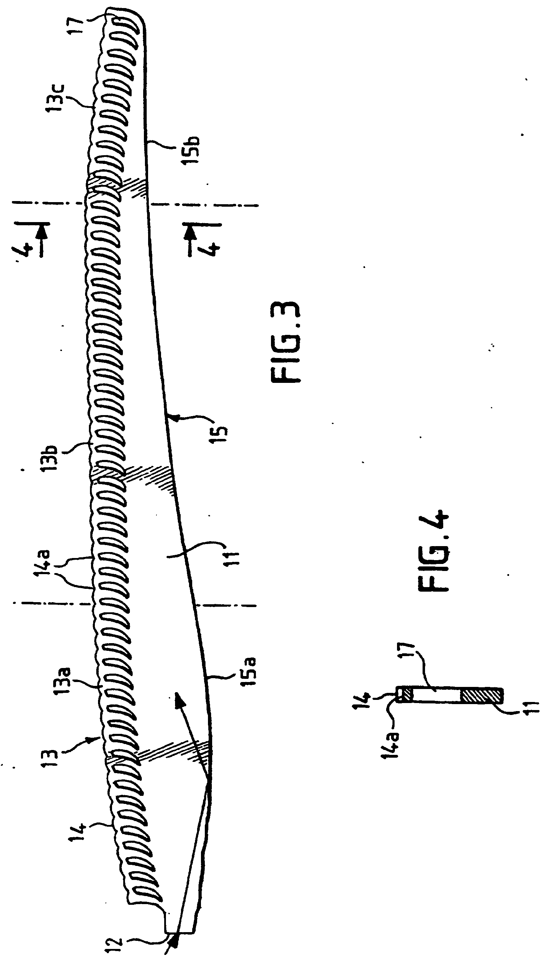

Aux figures 3 à 7, on a représenté un diffuseur réalisé dans une plaque d'une matière transparente, de préférence incolore, mais pour des applications déterminées, cette plaque pourrait être colorée en rouge, vert ou autre.

Le diffuseur est désigné par la référence 10 et présente une extrémité 12 constituant la zone d'entrée de la lumière, une source de lumière telle qu'une fibre optique, une lampe à incandescence avec un réflecteur convenable, étant disposée au voisinage de cette zone.

Le diffuseur 10 présente une face 13 de diffusion de la lumière qui comprend une zone 13a convexe, une zone 13b sensiblement rectiligne et une zone terminale 13c convexe.

La face 13 comporte une série de lentilles cylindriques 14.

Le diffuseur présente une face arrière 15 qui présente une zone convexe 15a prolongée jusqu'à l'extrémité opposée à la zone d'entrée 12 par une partie concave 15b.

Au voisinage de la face 13, le diffuseur présente une zone intermédiaire dans l'épaisseur de laquelle sont découpées des ouvertures identiques 17 qui présentent toutes une extrémité 17a située au droit des lignes de jonction 14a des lentilles cylindriques 14.

Chaque ouverture 17 détermine une face latérale 17d destinée à renvoyer la lumière vers les lentilles cylindriques 14.

Les extrémités 17c des ouvertures 17, opposées aux extrémités 17a, forment des dioptres plans de transfert de la lumière, tandis que la partie 17b des ouvertures 17 forme un arc en spirale logarithmique 17d.

La plaque constituant le diffuseur peut être obtenue par découpage, moulage, extrusion ou autre.

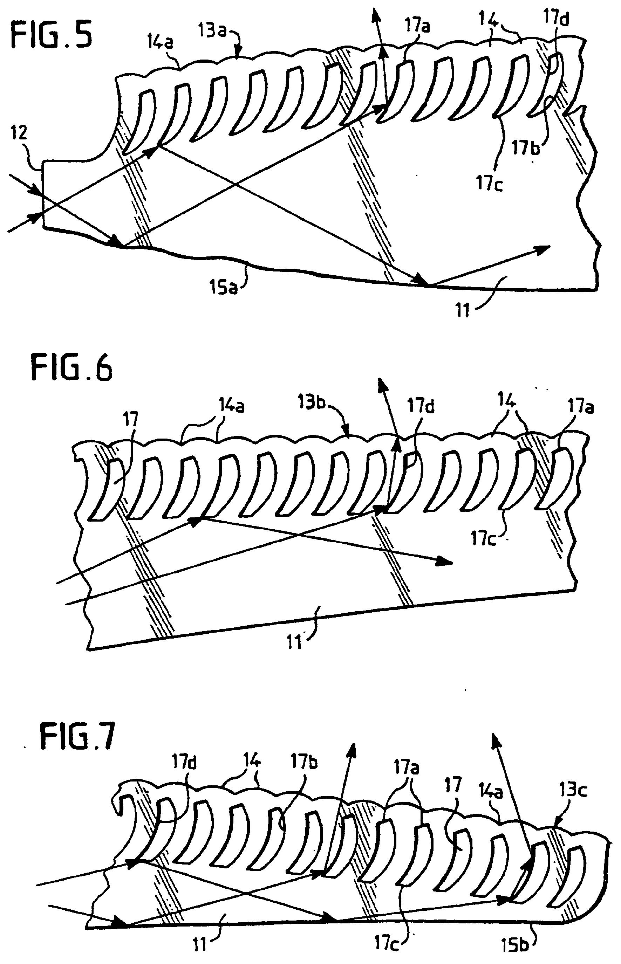

Comme on le voit aux figures 5, 6 et 7, la source de lumière est située au droit de la zone d'entrée 12, la zone 15a présentant une légère ondulation, elle constitue un dioptre arrière destiné à assurer le mixage de la lumière.

Les rayons qui sont dirigés vers la zone 15a sont renvoyés vers les lentilles cylindriques 14, s'ils rencontrent les dioptres plans 17c, ils sont renvoyés vers la zone 15b qui constitue un dioptre intermédiaire et ainsi finissent par rencontrer les faces latérales 17d pour être diffusés par les lentilles cylindriques correspondantes 14.

Les rayons qui sont directement dirigés vers les faces latérales 17d sont automatiquement éjectés par les lentilles cylindriques.

## Revendications

1. Diffuseur notamment pour feux de signalisation de véhicules et du type comprenant une source de lumière (6, 12) **caractérisé en ce qu'**il est constitué d'une plaque (1, 10) d'un matériau transparent conformée pour présenter une zone d'entrée (5, 12) de la lumière et une face de diffusion (2, 13) de la lumière comportant une série de lentilles cylindriques (4, 14) adjacentes les unes aux autres et une zone intermédiaire adjacente à la zone de diffusion de la lumière et présentant une série d'ouvertures (8, 9, 17) dont une extrémité est située au droit des lignes de jonction des lentilles (4, 14) cylindriques entre elles, tandis que l'autre extrémité forme un dioptre plan, un bord desdites ouvertures (8d, 9 d, 17d) présentant une concavité dirigée de manière à recevoir les rayons lumineux émis par la source de lumière et formant les faces latérales de renvoi desdits rayons lumineux vers les lentilles cylindriques (4, 14).

2. Diffuseur notamment pour feux de signalisation de véhicules, selon la revendication 1, **caractérisé en ce que** les bords de chaque ouverture (8d, 9d, 17d) constituant les faces de renvoi des rayons lumineux vers les lentilles cylindriques (4, 14) sont formés par des génératrices en spirales logarithmiques.

3. Diffuseur notamment pour feux de signalisation de véhicules, selon la revendication 1, **caractérisé en ce que** la zone d'entrée de la lumière est constituée par une encoche (5) située du côté d'une face de la plaque opposée à celle pourvue des lentilles cylindriques (4) et formée de deux spirales logarithmiques symétriques entre elles.

4. Diffuseur notamment pour feux de signalisation de véhicules, selon la revendication 1, **caractérisé en ce que** la zone d'entrée de la lumière est située à une extrémité (12) de la plaque (10).

5. Diffuseur notamment pour feux de signalisation de véhicules, selon la revendication 4, **caractérisé en ce que** les ouvertures (17) sont disposées parallèlement et à égale distance les unes des autres.

6. Diffuseur notamment pour feux de signalisation de véhicules, selon la revendication 3, **caractérisé en ce que** les ouvertures (8) sont disposées en deux séries, une première série s'étendant au droit de l'encoche jusqu'à une extrémité et une seconde série (9) s'étendant au droit de l'encoche (5) jusqu'à l'autre extrémité, les concavités de la première série (8) étant tournées en regard de celles de la seconde série (9).

7. Diffuseur notamment pour feux de signalisation de véhicules, selon les revendications 1, 2, 3 et 6, **caractérisé en ce que** la zone d'entrée de lumière comprend une série d'encoches (5) situées sur la face de la plaque opposée à celle pourvue des lentilles cylindriques (4), la distance séparant les encoches (5) entre elles et la forme de ces dernières sont telles que les faisceaux émis par les sources de lumière se chevauchent.

8. Diffuseur notamment pour feux de signalisation de véhicules, selon les revendications 1, 2 et 4, **caractérisé en ce que** la face de la plaque, opposée à celle pourvue des lentilles cylindriques, présente, à partir de la zone d'entrée de la lumière située à une extrémité de la plaque, une zone convexe prolongée par une zone de faible concavité s'étendant vers l'autre extrémité.

9. Diffuseur notamment pour feux de signalisation de véhicules, selon la revendication 8, **caractérisé en ce que** la zone convexe de la face opposée à la zone de diffusion de la lumière présente, au voisinage de la zone d'entrée de la lumière, une ondulation pour former un dioptre.

10. Diffuseur notamment pour feux de signalisation de véhicules, selon les revendications 1, 2, 4, 8 et 9, **caractérisé en ce que** la zone de diffusion de la lumière présente, à partir de la zone d'entrée de la lumière, une zone convexe, une zone sensiblement rectiligne et une zone terminale convexe.

## Patentansprüche

1. Lichtstreuelement, insbesondere für Signalleuchten von Fahrzeugen, die eine Lichtquelle (6, 12) aufweisen, **dadurch gekennzeichnet, dass** es aus einer Platte (1, 10) aus lichtdurchlässigem Material gebildet ist, die so geformt ist, dass sie eine Eintrittszone (5, 12) für das Licht und eine Streuseite (2, 13) für das Licht aufweist, welche eine Reihe von Zylinderlinsen (4, 14) umfasst, die eine an die andere angrenzen, sowie eine Zwischenzone aufweist, die an die Streuzone für das Licht angrenzt und eine Reihe von Öffnungen (8, 9, 17) aufweist, deren eines Ende auf die Verbindungslinien zwischen den Zylinderlinsen (4, 14) ausgerichtet ist, während das andere Ende einen ebenen Diopter bildet, wobei ein Rand (8d, 9d, 17d) der genannten Öffnungen eine Konkavität bildet, die so gerichtet ist, dass sie die durch die Lichtquelle ausgesandten Lichtstrahlen empfängt und seitliche Flächen bildet, die die genannten Lichtstrahlen zu den Zylinderlinsen (4, 14) hin reflektieren.

2. Lichtstreuelement, insbesondere für Signalleuchten von Fahrzeugen, nach Anspruch 1, **dadurch gekennzeichnet, dass** die Ränder (8d, 9d, 17d) jeder Öffnung, die die Flächen für die Reflexion der Lichtstrahlen zu den Zylinderlinsen (4, 14) bilden, durch Erzeugende Iogarithmischer Spiralen gebildet sind.

3. Lichtstreuelement, insbesondere für Signalleuchten von Fahrzeugen, nach Anspruch 1, **dadurch gekennzeichnet, dass** die Eintrittszone des Lichtes durch eine Vertiefung (5) gebildet ist, die auf derjenigen Seite einer Fläche der Platte, welche der mit den Zylinderlinsen (4) Versehenen entgegengesetzt ist, gelegen und aus zwei logarithmischen Spiralen gebildet ist, die zueinander symmetrisch sind.

4. Lichtstreuelement, insbesondere für Signalleuchten von Fahrzeugen, nach Anspruch 1, **dadurch gekennzeichnet, dass** die Eintrittszone des Lichtes an einem Ende (12) der Platte (10) gelegen ist.

5. Lichtstreuelement, insbesondere für Signalleuchten von Fahrzeugen, nach Anspruch 4, **dadurch gekennzeichnet, dass** die Öffnungen (17) parallel und in gleichem Abstand voneinander angeordnet sind.

6. Lichtstreuelement, insbesondere für Signalleuchten von Fahrzeugen, nach Anspruch 3, **dadurch gekennzeichnet, dass** die Öffnungen (8) in zwei Reihen angeordnet sind, wobei eine erste Reihe, auf die Vertiefung ausgerichtet, sich bis zu einem Ende und eine zweite Reihe (9), auf die Vertiefung (5) ausgerichtet, sich bis zum anderen Ende erstreckt, wobei die Konkavitäten der ersten Reihe (8) denjenigen der zweiten Reihe (9) zugewandt sind.

7. Lichtstreuelement, insbesondere für Signalleuchten von Fahrzeugen, nach den Ansprüchen 1, 2, 3 und 6, **dadurch gekennzeichnet, dass** die Eintrittszone des Lichtes eine Reihe von Vertiefungen (5) umfasst, die auf der Seite der Platte gelegen sind, die derjenigen entgegengesetzt ist, die mit den Zylinderlinsen (4) versehen ist, wobei der Abstand, der die Vertiefungen (5) voneinander trennt, und die Form der Letzteren so sind, dass die von den Lichtquellen ausgesandten Bündel sich überschneiden.

8. Lichtstreuelement, insbesondere für Signalleuchten von Fahrzeugen, nach den Ansprüchen 1, 2 und 4, **dadurch gekennzeichnet, dass** die Seite der Platte, die derjenigen entgegengesetzt ist, die mit den Zylinderlinsen versehen ist, ausgehend von der an einem Ende der Platte gelegenen Eintrittszone des Lichtes eine konvexe Zone aufweist, die durch eine Zone leichter Konkavität verlängert ist, die sich gegen das andere Ende hin erstreckt.

9. Lichtstreuelement, insbesondere für Signalleuchten von Fahrzeugen, nach Anspruch 8, **dadurch gekennzeichnet, dass** die konvexe Zone der Seite, die der Streuzone des Lichtes entgegengesetzt ist, in der Nähe der Eintrittszone des Lichtes eine gewellte Form aufweist, um einen Diopter zu bilden.

10. Lichtstreuelement, insbesondere für Signalleuchten von Fahrzeugen, nach den Ansprüchen 1, 2, 4, 8 und 9, **dadurch gekennzeichnet, dass** die Streuzone des Lichtes, ausgehend von der Eintrittszone des Lichtes, eine konvexe Zone, eine im wesentlichen geradlinige Zone und eine konvexe Endzone besitzt.

## Claims

1. Diffuser in particular for vehicle signal lights and of the type comprising a light source (6, 12), **characterised in that** it consists of a plate (1, 10) made of a transparent material and shaped so as to have an entry zone (5, 12) for the light and a diffusion surface (2, 13) for the light comprising a series of cylindrical lenses (4, 14) adjacent to one another and an intermediate zone adjacent to the zone for the diffusion of the light and having a series of openings (8, 9, 17) one end of which is positioned next to the junction lines with the cylindrical lenses (4, 14), whereas the other end forms a diopter plane, one edge of said openings (8d, 9d, 17d) having a concave shape directed so as to receive light rays emitted by the light source and forming the lateral surfaces for reflecting said light rays towards the cylindrical lenses (4, 14).

2. Diffuser in particular for vehicle signal lights according to claim 1, **characterised in that** the edges of each opening (8d, 9d, 17d) comprising the surfaces for reflecting the light rays towards the cylindrical lenses (4, 14) are formed by generatrices in logarithmic spirals.

3. Diffuser in particular for vehicle signal lights according to claim 1, **characterised in that** the entry zone of the light consists of a slot (5) positioned on the side of a surface of the plate opposite to the one provided with cylindrical lenses (4) and formed from two logarithmic spirals which are symmetrical to one another.

4. Diffuser in particular for vehicle signal lights according to claim 1, **characterised in that** the entry zone of the light is positioned at one end (12) of the plate (10).

5. Diffuser in particular for vehicle signal lights according to claim 4, **characterised in that** the openings (17) are arranged in parallel and equidistant from one another.

6. Diffuser in particular for vehicle signal lights according to claim 3, **characterised in that** the openings (8) are arranged in two series, a first series extending from next to the slot to one end and a second series (9) extending from next to the slot (5) to the other end, the concavities of the first series (8) being arranged in opposite direction to those of the second series (9).

7. Diffuser in particular for vehicle signal lights according to claims 1, 2, 3 and 6 **characterised in that** the entry zone of the light comprises a series of slots (5) positioned on the face of the plate opposite the one provided with cylindrical lenses (4), the distance separating the slots (5) and the shape of the latter being such that the beams emitted by the light sources overlap.

8. Diffuser in particular for vehicle signal lights according to claims 1, 2 and 4 **characterised in that** the face of the plate, opposite the one provided with cylindrical lenses, has from the entry zone of the light situated at one end of the plate, a convex zone extended by a zone with slight concavity extending towards the other end.

9. Diffuser in particular for vehicle signal lights according to claim 8, **characterised in that** the convex zone of the face opposite the diffusion zone of the light has adjacent to the entry zone of the light an undulation to form a diopter.

10. Diffuser in particular for vehicle signal lights according to claims 1, 2, 4, 8 and 9, **characterised in that** the diffusion zone of the light has from the entry zone of the light, a convex zone, a zone that is virtually rectilinear and a convex terminal zone.
